# EUROPÄISCHE PATENTANMELDUNG

(11) **EP 1 810 568 A2**
(43) Veröffentlichungstag der Anmeldung: **25.07.2007**
(21) Anmeldenummer: 07100572.2
(22) Anmeldetag: 16.01.2007
(51) Int. Cl.: A01M 7/00

(54) **Verteilergebläsevorrichtung**

(30) Priorität: 24.01.2006 DE 102006003992
(71) Anmelder: Tigges, Rudolf, 72813 St. Johann (DE); Euchner, Albrecht, 72661 Grafenberg (DE)
(72) Erfinder: Tigges, Rudolf, 72813 St. Johan (DE); Euchner, Albrecht, 72661 Grafenberg (DE)
(74) Vertreter: Hoeger, Stellrecht & Partner Patentanwälte

(57) **Zusammenfassung**

Es wird eine Verteilergebläsevorrichtung, umfassend mindestens ein Gebläse (38) zur Luftansaugung, eine Düseneinrichtung (130) mit Düsen (132) für zu verteilendes Medium, eine Luftausblaseinrichtung (110), welche der Düseneinrichtung (130) zugeordnet ist und über welche angesaugte Luft ausblasbar ist, und ein Strömungsführungsgehäuse (50) für angesaugte Luft vorgeschlagen, bei welcher das Strömungsführungsgehäuse einen ersten Bereich (52) aufweist, in welchem Luft von dem mindestens einen Gebläse (38) weg nach oben führbar ist, einen zweiten Bereich (60) aufweist, in dem angesaugte Luft nach unten führbar ist, wobei die Luftausblaseinrichtung (110) in fluidwirksamer Verbindung mit dem zweiten Bereich (60) steht, und einen Umlenkbereich aufweist, über welchen der erste Bereich und der zweite Bereich fluidwirksam verbunden sind und an welchem eine Strömungsumlenkung erfolgt.

## Beschreibung

Die Erfindung betrifft eine Verteilergebläsevorrichtung, umfassend mindestens ein Gebläse zur Luftansaugung, eine Düseneinrichtung mit Düsen für zu verteilendes Medium, eine Luftausblaseinrichtung, welche der Düseneinrichtung zugeordnet ist und über welche angesaugte Luft ausblasbar ist, und ein Strömungsführungsgehäuse für angesaugte Luft.

Verteilergebläsevorrichtungen werden insbesondere für landwirtschaftliche oder forstwirtschaftliche Zwecke eingesetzt, um chemische Substanzen, insbesondere Pflanzenschutzmittel, zu verteilen.

Aus der WO 99/23876 A1 ist ein Verteilergebläse für in der Land- und Forstwirtschaft eingesetzte chemische Substanzen, insbesondere Pflanzenschutzmittel bekannt, welches zwei an einem Gerätegestell angeordnete Gebläseeinheiten umfasst, von denen jede ein Gebläsegehäuse sowie ein in diesem angeordnetes und durch einen Antrieb um eine Laufradachse rotierend angetriebenes Radiallaufrad aufweist. Das Radiallaufrad erzeugt mit dem Gebläsegehäuse ein sich in dem Gebläsegehäuse ausbildenden Gebläseluftstrom, der nach Durchtritt durch eine Gehäuseauslassöffnung ein sich in nur einer Gesamtstromrichtung ausbreitenden Verteilerluftstrom für die chemischen Substanzen bildet und wobei sich die von den Gebläseeinheiten erzeugten Verteilerluftströme in unterschiedliche Gesamtstromrichtungen ausbreiten. Die Gebläseeinheiten sind so ausgebildet, dass die Gebläseluftströme in den Gebläseeinheiten einen unterschiedlichen Drehsinn bezüglich der jeweiligen Laufradachse aufweisen.

Aus der US 2,738,226 ist eine Vorrichtung zum Besprühen von Pflanzen bekannt. Diese umfasst eine Führung, ein Gebläse, um der Führung einen Luftstrom bereitzustellen, und einen zentrifugalen Zerstäuber, welcher innerhalb der Luftführung angeordnet ist.

Aus der DE 38 03 145 A1 ist eine Pflanzenschutz-Austragvorrichtung für landwirtschaftliche hochstämmige Reinkulturen bekannt, mit mindestens einer über eine Pflanzenreihe zu verfahrenden Austrageinheit, die einen Durchlass für die Pflanzenreihe aufweist, welche mit Austragmitteln für Behandlungsmedien versehen ist. Eine Rücksaugeinrichtung ist an den Durchlass angeschlossen. Die Rücksaugeinrichtung ist für einen Anschluss an ein SaugGebläse ausgebildet.

Der Erfindung liegt die Aufgabe zugrunde, eine Verteilergebläsevorrichtung der eingangs genannten Art bereitzustellen, mittels welcher sich eine Verteilerluftwand ausbilden lässt, welche über einen großen Höhenbereich einen hohen Homogenitätsgrad aufweist.

Diese Aufgabe wird bei der eingangs genannten Verteilergebläsevorrichtung erfindungsgemäß dadurch gelöst, dass das Strömungsführungsgehäuse einen ersten Bereich aufweist, in welchem Luft von dem mindestens einen Gebläse weg nach oben führbar ist, einen zweiten Bereich aufweist, in dem angesaugte Luft nach unten führbar ist, wobei die Luftausblaseinrichtung in fluidwirksamer Verbindung mit dem zweiten Bereich steht, und einen Umlenkbereich aufweist, über welchen der erste Bereich und der zweite Bereich fluidwirksam verbunden sind und an welchem eine Strömungsumlenkung erfolgt.

Durch die Luftausblaseinrichtung wird ein Verteilerluftstrom für das zu verteilende Medium bereitgestellt. Erfindungsgemäß weist das Strömungsführungsgehäuse einen ersten Bereich auf, mit dem sich ein Gesamtvolumenstrom der angesaugten Luft nach oben führen lässt. Die Luftausblaseinrichtung ist an den zweiten Bereich (und gegebenenfalls an den Umlenkbereich) gekoppelt, welchem Luft über den Umlenkbereich zugeführt wird, wobei in dem zweiten Bereich der Luftstrom nach unten geführt ist. Durch die erfindungsgemäße Lösung lässt sich über einen Höhenbereich, welcher im wesentlichen der Höhe des Strömungsführungsgehäuses entsprechen kann, eine Verteiler-Luftstromwand mit hohem Homogenitätsgrad erzeugen.

Die Verteiler-Luftstromwand lässt sich an einer oder beiden Seiten des Strömungsführungsgehäuses ausbilden. Dadurch kann eine Verteiler-Luftstromwand links und rechts an dem Strömungsführungsgehäuse erzeugt werden, wobei auf einfache Weise steuerbar ist, ob eine solche Luftwand sowohl links oder rechts oder entweder links oder rechts auszubilden ist. Ferner können auch asymmetrische Luftwände links und rechts erzeugt werden.

Eine erfindungsgemäße Verteilergebläsevorrichtung lässt sich auf vielfältige Weise einsetzen. Beispielsweise wird sie zum Besprühen von Weinreben mit Pflanzenschutzmittel eingesetzt. Es lässt sich eine homogene Besprühung der Weinreben durchführen. Durch Einstellung der Verteiler-Luftstromwand entweder nur nach links oder nach rechts lassen sich auch Randzeilen ohne oder mit verringerter Luftzuführung besprühen. Dies kann sinnvoll (oder sogar gesetzlich vorgeschrieben) sein, wenn beispielsweise Gewässer in der Nähe sind.

Die erfindungsgemäße Verteilergebläsevorrichtung lässt sich kompakt ausbilden. Beispielsweise lässt sie sich mit relativ geringen Breitenabmessungen ausbilden.

Durch die definierte und einfache Strömungsführung der Luft in dem Strömungsführungsgehäuse kann auch die Drehzahl für ein Laufrad des Gebläses reduziert werden. Dadurch lässt sich wiederum die Geräuschemission der Verteilergebläsevorrichtung reduzieren.

Insbesondere sind der erste Bereich und der zweite Bereich hintereinander angeordnet mit mindestens einer Wand zwischen dem ersten Bereich und dem zweiten Bereich. Insbesondere sind der erste Bereich und der zweite Bereich bezogen auf eine Fahrtrichtung der Verteilergebläsevorrichtung hintereinander angeordnet. Die einzige fluidwirksame Verbindung zwischen dem ersten Bereich und dem zweiten Bereich erfolgt über den Umlenkbereich. Durch eine direkte Anordnung des ersten Bereichs und des zweiten Bereichs hintereinander lässt sich ein kompakt ausgebildetes Strömungsführungsgehäuse bereitstellen, welches relativ geringe Tiefenabmessungen aufweist.

Insbesondere bildet der Umlenkbereich ein oberes Ende des Strömungsführungsgehäuses. Dadurch lassen sich die Höhenabmessungen gering halten, wobei sich eine Verteiler-Luftstromwand über im wesentlichen die gesamte Höhe des Strömungsführungsgehäuses ausbilden lässt.

Der Umlenkbereich lässt sich auf einfache Weise ausbilden, wenn er eine gekrümmte Wand aufweist. Durch die gekrümmte Wand lässt sich auf einfache Weise eine Strömungsumlenkung realisieren.

Ganz besonders vorteilhaft ist es, wenn die Düseneinrichtung so ausgebildet ist, dass Medium nach links und/oder nach rechts bezogen auf eine Fahrtrichtung sprühbar ist. Dadurch lässt sich auf einfache Weise eine Besprühung von beispielsweise Pflanzenreihen erreichen.

Günstig ist es dann, wenn die Düseneinrichtung eine erste Düsenreihe mit einer Mehrzahl von Düsen und eine zweite Düsenreihe mit einer Mehrzahl von Düsen aufweist. Dadurch lässt sich auf einfache Weise eine Besprühung nach links und/oder nach rechts erreichen.

Ganz besonders vorteilhaft ist es, wenn die erste Düsenreihe seitlich angeordnet ist und die zweite Düsenreihe seitlich angeordnet ist. Dadurch lässt sich auf einfache Weise ein seitliches Aussprühen realisieren.

Insbesondere ist die Sprührichtung der Düsen der ersten Düsenreihe und der Düsen der zweiten Düsenreihe mindestens näherungsweise entgegengerichtet, um so auf einfache Weise eine seitliche Besprühbarkeit zu erreichen. Das Medium wird dabei in die Verteiler-Luftstromwand der Luftausblaseinrichtung eingesprüht, wodurch man eine homogene Verteilung über einen großen Höhenbereich erhält.

Günstig ist es, wenn die Luftausblaseinrichtung eine der ersten Düsenreihe zugeordnete erste Luftausblasreihe und der zweiten Düsenreihe zugeordnete zweite Luftausblasreihe aufweist. Durch die Luftausblasreihen lässt sich über einen großen Höhenbereich eine Luftwand mit hohem Homogenitätsgrad ausbilden. In diese Luftwand lässt sich zu verteilendes Medium über die Düsen einspritzen.

Günstigerweise ist die erste Luftausblasreihe mindestens teilweise an einer Seitenwand des zweiten Bereichs angeordnet. Dadurch lässt sich zu einer Seite hin eine Luftwand ausbilden.

Aus dem gleichen Grund ist es günstig, wenn die zweite Luftausblasreihe mindestens teilweise an einer Seitenwand des zweiten Bereichs angeordnet ist. Die Seitenwand liegt dabei insbesondere der Seitenwand, an welcher die erste Luftausblasreihe angeordnet ist, gegenüber.

Ganz besonders vorteilhaft ist es, wenn das Strömungsführungsgehäuse eine erste Strömungskammer und eine getrennte zweite Strömungskammer aufweist. Durch die Strömungskammern lassen sich unterschiedlichen Luftausblasreihen getrennt Luft zuführen. Dadurch ergeben sich erweiterte Steuerungsmöglichkeiten. Insbesondere ist einstellbar, ob einer Luftausblasreihe Luft zugeführt wird oder nicht, das heißt die Luftzuführung zu einer Luftausblasreihe ist schaltbar. Ferner kann auch eine Dosierung des zugeführten Luftvolumenstroms vorgesehen sein. Dadurch wiederum lässt sich auf einfache Weise einstellen, ob eine Luftwand nach links oder nach rechts ausgebildet wird oder nur zu einer Seite hin ausgebildet wird oder ob asymmetrische Luftwände ausgebildet werden.

Insbesondere sind die erste Strömungskammer und die zweite Strömungskammer parallel zueinander angeordnet. Dadurch lässt sich ein Gesamt-Luftvolumenstrom, wenn dies gewünscht ist, parallel auf die erste Strömungskammer und die zweite Strömungskammer aufteilen. Dadurch erhält man symmetrische Verhältnisse.

Es kann vorgesehen sein, dass zwischen der ersten Strömungskammer und der zweiten Strömungskammer mindestens eine Wand liegt. Dadurch lassen sich getrennte Strömungskammern auf einfache Weise in dem Strömungsführungsgehäuse ausbilden.

Ganz besonders vorteilhaft ist es, wenn die erste Strömungskammer und die zweite Strömungskammer symmetrisch angeordnet und ausgebildet sind. Dadurch lassen sich bei entsprechender Luftstrombeaufschlagung symmetrische Luftwände nach links und nach rechts erzeugen.

Insbesondere sind die erste Strömungskammer und die zweite Strömungskammer in dem zweiten Bereich angeordnet. Die Strömungskammern können dabei auch an dem Umlenkbereich angeordnet sein. Es ist auch möglich, dass sie sich mindestens teilweise in den ersten Bereich erstrecken. Über den ersten Bereich wird ein Gesamtluftstrom bereitgestellt, welcher dann auf die erste Strömungskammer und die zweite Strömungskammer verteilbar ist.

Insbesondere ist eine erste Luftausblasreihe an die erste Strömungskammer gekoppelt und eine zweite Luftausblasreihe ist an die zweite Strömungskammer gekoppelt. Dadurch lässt sich die Luftwand, welche von der entsprechenden Luftausblasreihe erzeugt wird, in gewissem Umfang einstellen.

Insbesondere lässt sich einstellen, ob eine Luftwand nach links, nach rechts oder nach links und nach rechts ausgebildet wird.

Ganz besonders vorteilhaft ist es, wenn die angesaugte Luft parallel auf die erste Strömungskammer und die zweite Strömungskammer aufteilbar ist, oder in unterschiedlichen Volumenströmen auf die erste Strömungskammer und die zweite Strömungskammer aufteilbar ist. Dadurch ergeben sich Einstellmöglichkeiten, die für praktische Anwendungen vorteilhaft sind. Wenn beispielsweise gleichmäßig nach links und rechts eine Luftwand erzeugt wird, lässt sich beim Durchfahren durch Reihen wie beispielsweise bei Weinreben eine gleichmäßige Besprühung nach links und nach rechts erreichen, so dass eine zeitsparende Mediumbeaufschlagung ermöglicht ist. Beim Besprühen von Randzeilen kann eine derartige Einstellung erfolgen, dass eine Luftwand nur zu einer Seite hin ausgebildet wird.

Günstig ist es, wenn eine Einstelleinrichtung zur Einstellung der Volumenströme in der ersten Strömungskammer und der zweiten Strömungskammer vorgesehen ist. Dadurch lässt sich eine Anpassung an die jeweilige Anwendung auf einfache Weise durchführen.

Bei einer konstruktiv einfachen Ausführungsform weist die Einstelleinrichtung mindestens eine schwenkbar angeordnete Klappe auf. Durch die Klappe lässt sich eine Mündungsöffnung der ersten Strömungskammer oder der zweiten Strömungskammer je nach Schwenkstellung der Klappe teilweise oder ganz abdecken. Dadurch lässt sich einstellen, welcher Volumenstrom in eine Strömungskammer eingekoppelt wird.

Günstigerweise ist die (mindestens eine) Klappe mindestens teilweise an den ersten Bereich angeordnet. Dadurch lässt sich eine platzsparende Ausbildung erreichen.

Ganz besonders vorteilhaft ist es, wenn die (mindestens eine) Klappe eine Stellung aufweist, in welcher die angesaugte Luft gleichmäßig auf die erste Strömungskammer und die zweite Strömungskammer aufteilbar ist. Dadurch lässt sich eine Luftwand sowohl nach links als auch nach rechts mit hohem Symmetriegrad ausbilden.

Günstig ist es ferner, wenn die Klappe Schwenkstellungen aufweist, über welche die Aufteilung des angesaugten Luftstroms auf die erste Strömungskammer und die zweite Strömungskammer einstellbar ist. Dadurch lassen sich asymmetrische Verhältnisse bezogen auf die Luftwände einstellen.

Günstig ist es ferner, wenn der zweite Bereich einen Bereich aufweist, in welchem die erste Strömungskammer und die zweite Strömungskammer durch eine Trennwand getrennt sind. Dieser Bereich kann ein Teilbereich des zweiten Bereichs sein oder den gesamten zweiten Bereich umfassen. Durch die Trennwand lässt sich auf einfache Weise eine Trennung erreichen.

Es kann auch vorgesehen sein, dass der zweite Bereich einen Bereich aufweist, an welchem zwischen der ersten Strömungskammer und der zweiten Strömungskammer ein Freibereich liegt. Dieser Bereich kann ein Teilbereich sein oder den zweiten Bereich im Ganzen umfassen. Über dem Freibereich wird ein Raum bereitgestellt, in dem sich Komponenten der Verteilergebläsevorrichtung positionieren lassen.

Beispielsweise ist eine Antriebseinrichtung für das mindestens eine Gebläse mindestens teilweise in dem Freibereich angeordnet. Dadurch lässt sich auf einfache Weise eine Drehmomentübertragung auf ein Laufrad des Gebläses erreichen. Links und rechts von dem Freibereich sind Teile der ersten Strömungskammer und der zweiten Strömungskammer angeordnet. Dadurch lässt sich die Luftwand über einen weiten Bereich auch nach unten ausbilden und insbesondere lässt sie sich bis an oder in die Nähe eines unteren Endes des Strömungsgehäuses ausbilden.

Beispielsweise ist mindestens ein Teil einer Getriebeeinrichtung in dem Freiraum angeordnet. Dadurch lässt sich die Verteilergebläsevorrichtung auf kompakte Weise ausbilden.

Vorteilhaft ist es, wenn das mindestens eine Gebläse ein Laufrad aufweist, welches mit einer Drehzahl von 1000 U/min und 1500 U/min angetrieben ist. Durch eine solche relativ geringe Drehzahl lässt sich die Geräuschemission gering halten. Durch das erfindungsgemäße Strömungsführungsgehäuse lassen sich auch mit solchen relativ niedrigen Drehzahlen Luftwände mit großem Homogenitätsgrad und einer großen Höhenerstreckung ausbilden.

Insbesondere ist es günstig, wenn die Luftausblaseinrichtung eine Gesamthöhe aufweist, welche im wesentlichen der Gesamthöhe des Strömungsführungsgehäuses entspricht. Dadurch ergeben sich bei kompakter Ausbildung des Strömungsführungsgehäuses hohe Einsatzwirkungsgrade.

Es kann günstig sein, wenn Düsen der Düseneinrichtung schwenkbar sind. Dadurch lässt sich eine Sprührichtung der Düsen einstellen. Eine Schwenkachse ist dabei vorzugsweise parallel zur Fahrtrichtung der Verteilergebläsevorrichtung.

Günstig ist es, wenn die Luftausblaseinrichtung Luftleiteinrichtungen aufweist, welche einer oder mehreren Düsen zugeordnet sind, wobei über die Luftleiteinrichtungen Ausblasluft der oder den Düsen bereitstellbar ist. Über die Luftleiteinrichtungen lässt sich eine Luftwand mit einem hohen Homogenitätsgrad ausbilden.

Es kann vorgesehen sein, dass eine Luftleiteinrichtung schwenkbar angeordnet ist. Die Schwenkachse ist vorteilhafterweise im wesentlichen parallel zu einer Fahrtrichtung der Verteilergebläsevorrichtung. Durch eine schwenkbare Luftleiteinrichtung mit einer Mündungsöffnung vor Ausblasluft lässt sich die Richtung des Luftstroms einstellen. Beispielsweise kann eine Verschwenkbarkeit um einen Winkel in der Größenordnung von ± 10° vorgesehen sein.

Günstigerweise ist eine Luftleiteinrichtung um eine Schwenkachse im wesentlichen parallel zu einer Fahrtrichtung der Verteilergbläse schwenkbar. Dadurch lässt sich bei Ausbildung einer Luftwand, welche sich über eine große Höhe erstreckt, in gewissem Maße eine Strömungsrichtung einstellen.

Günstig ist es, wenn die Düse oder Düsen derart mit einer zugeordneten Luftleiteinrichtung gekoppelt sind, dass die Düse oder Düsen und die Luftleiteinrichtung gemeinsam schwenkbar sind. Dadurch wird für eine mechanische Synchronisierung der entsprechenden Schwenkstellungen der Düse oder Düsen und der Luftleiteinrichtung gesorgt. Dadurch ergeben sich optimierte Verteilungsergebnisse auch bei Schwenkstellungen von Düsen und Luftleiteinrichtungen.

Günstig ist es, wenn eine Luftleiteinrichtung eine mindestens näherungsweise rechteckförmige Mündungsöffnung aufweist. Dadurch lässt sich eine Luftwand mit hohem Homogenitätsgrad und mit einem großem Höhenerstreckungsbereich ausbilden.

Ganz besonders vorteilhaft ist es, wenn ein vorderes Ende einer Düse bezüglich einer Mündungsöffnung einer Luftleiteinrichtung zurückgesetzt ist. Dadurch ragt die Düse nicht über eine Luftleiteinrichtung hinaus und ist dadurch mechanisch geschützt.

Günstig ist es, wenn eine Luftleiteinrichtung eine oder mehrere Luftleitflächenelemente aufweist. Die Luftleitflächenelemente sind insbesondere als Luftleitbleche ausgebildet. Sie sind in einem Innenraum der Luftleiteinrichtungen angeordnet. Über sie lässt sich eine optimierte Strömungslenkung erreichen.

Insbesondere sind das oder die Luftleitflächenelemente schwenkbar an der zugeordneten Luftleiteinrichtung angeordnet. Dadurch ergeben sich erweiterte Einstellmöglichkeiten, um die Verteilungsergebnisse zu optimieren.

Insbesondere ist jeder Düse ein Luftleitflächenelement zugeordnet, um eine optimierte Einstellung für jede Düse durchführen zu können.

Günstigerweise erstreckt sich ein Luftleitflächenelement im wesentlichen über eine Breite einer Mündungsöffnung der Luftleiteinrichtung. Dadurch lässt sich eine Luftwand mit hohem Homogenitätsgrad ausbilden, wobei sich erweiterte Einstellmöglichkeiten ergeben.

Günstig ist es, wenn eine Luftleiteinrichtung mindestens eine Öffnung aufweist, mittels welcher sie in fluidwirksamer Verbindung mit einem Innenraum des Strömungsführungsgehäuses steht. Über diese Öffnung lässt sich der Mündungsöffnung der Luftleiteinrichtung angesaugte Luft zuführen, um eine Verteiler-Luftstromwand auszubilden.

Es ist vorteilhaft, wenn die Anzahl der Öffnungen der Anzahl der Düsen entspricht, welchen die Luftleiteinrichtung zugeordnet ist. Dadurch lässt sich eine optimierte Einsprühbarkeit von zu verteilendem Medium in eine Luftwand erreichen.

Ganz besonders vorteilhaft ist es, wenn eine Querschnittsfläche der mindestens einen Öffnung kleiner ist als eine zugeordnete Mündungsöffnung der Luftleiteinrichtung. Dadurch lässt sich aufgrund des Venturi-Effekts Luft an einer Luftleiteinrichtung ansaugen. Dadurch wiederum lässt sich das Ausblasvolumen per Zeiteinheit erhöhen, um ein verbessertes Verteilungsergebnis zu erhalten.

Ganz besonders vorteilhaft ist es, wenn die Verteilergebläsevorrichtung fahrbar ausgebildet ist. Die Verteilergebläsevorrichtung kann beispielsweise so ausgebildet sein, dass sie gezogen oder geschoben fahrbar ist. Sie kann als Aufsatzvorrichtung ausgebildet sein, welche an einem selbstfahrenden Schlepper montierbar ist oder an einem gezogenen oder geschobenen Anhänger montierbar ist. Sie kann auch integraler Bestandteil einer gezogenen oder geschobenen Einrichtung (wie einem Anhänger) sein. Es kann vorgesehen sein, dass sich die Luftausblaseinrichtung bis in den Umlenkbereich erstreckt. Dadurch lässt sich eine Verteiler-Luftstromwand über einen großen Höhenbereich und insbesondere über im wesentlichen die gesamte Höhe des Strömungsführungsgehäuses ausbilden.

Die nachfolgende Beschreibung bevorzugter Ausführungsformen dient im Zusammenhang mit der Zeichnung der näheren Erläuterung der Erfindung. Es zeigen:
- Figur 1: eine Seitenansicht eines ersten Ausführungsbeispiels einer (gezogenen) Verteilergebläsevorrichtung;
- Figur 2: eine perspektivische Darstellung eines Teils der Verteilergebläsevorrichtung gemäß Figur 1 bzw. eine Ausführungsform einer (getragenen) Verteilergebläsevorrichtung;
- Figur 3: eine Seitenansicht der Verteilergebläsevorrichtung gemäß Figur 2;
- Figur 4: eine Hinteransicht der Verteilergebläsevorrichtung gemäß Figur 2;

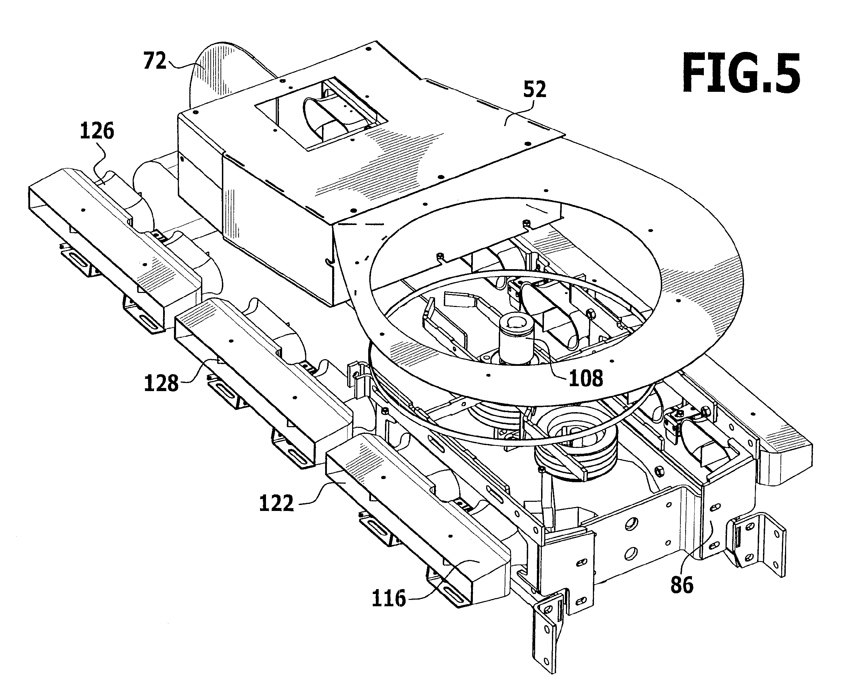

- Figur 5: eine perspektivische Teildarstellung der Verteilergebläsevorrichtung gemäß Figur 2; und
- Figur 6: eine weitere perspektivische Teildarstellung der Verteilergebläsevorrichtung gemäß Figur 2.

Eine erfindungsgemäße Verteilergebläsevorrichtung wird insbesondere in der Land- und Forstwirtschaft eingesetzt, um chemische Substanzen, insbesondere Pflanzenschutzmittel, zu versprühen. Beispielsweise wird die Verteilergebläsevorrichtung im Weinbau eingesetzt, um Weinreben mit Pflanzenschutzmittel zu besprühen.

Die Verteilergebläsevorrichtung ist fahrbar ausgebildet. Sie kann selbstfahrend sein, beispielsweise mittels eines Anhängers durch eine Zugmaschine gezogen werden (oder geschoben werden) oder getragen (beispielsweise an einem Anhänger oder direkt an einem Schlepper) werden.

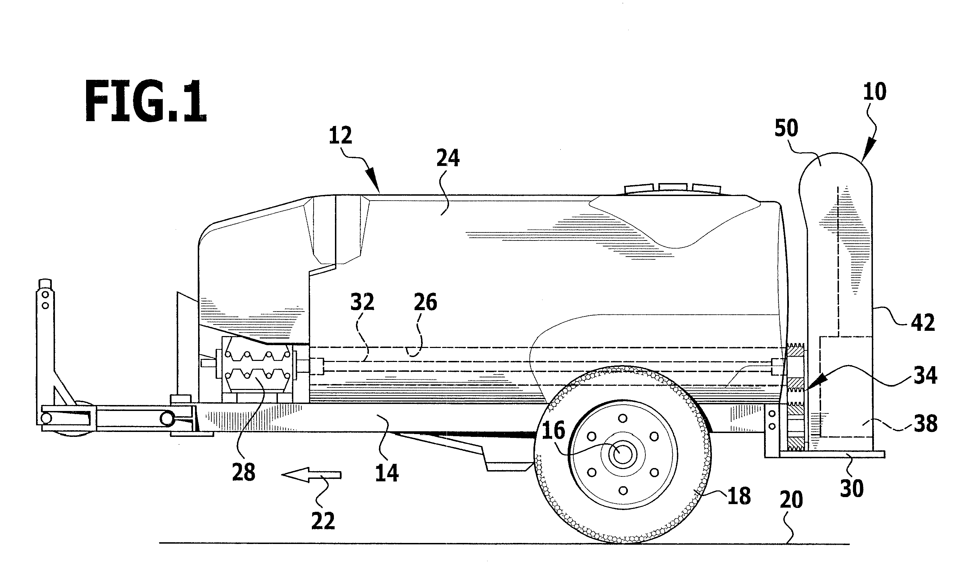

Ein Ausführungsbeispiel einer erfindungsgemäßen Verteilergebläsevorrichtung, welches in Figur 1 gezeigt und dort mit 10 bezeichnet ist, ist an einer als Ganzes mit 12 bezeichneten Gebläsespritze zum Ausbringen von Pflanzenschutzmittel montiert. In dem gezeigten Ausführungsbeispiel ist die Gebläsespritze 12 als Anhängerspritze ausgebildet, welche ein Fahrgestell 14 aufweist.

An dem Fahrgestell 14 ist eine Achse 16 montiert, an welcher zwei Räder 18 sitzen. Die Gebläsespritze 12 ist auf einem Untergrund 20 in einer Fahrtrichtung 22 fahrbar.

Das Fahrgestell 14 trägt einen Tank 24 für Spritzmittel. Dieser weist einen Längsdurchbruch 26 auf, welcher sich in einer Richtung quer zur Drehachse der Räder 18 erstreckt. (Diese Erstreckungsrichtung ist im wesentlichen parallel zur Fahrtrichtung 22.)

An dem Fahrgestell 14 ist eine Pumpe 28 angeordnet, wobei der Tank 24 zwischen der Pumpe 28 und der Verteilergebläsevorrichtung 10 positioniert ist.

An einem hinteren Ende (bezogen auf die Fahrtrichtung 22) des Fahrgestells 14 ist ein Gerätegestell 30 angeordnet, welches die Verteilergebläsevorrichtung 10 trägt.

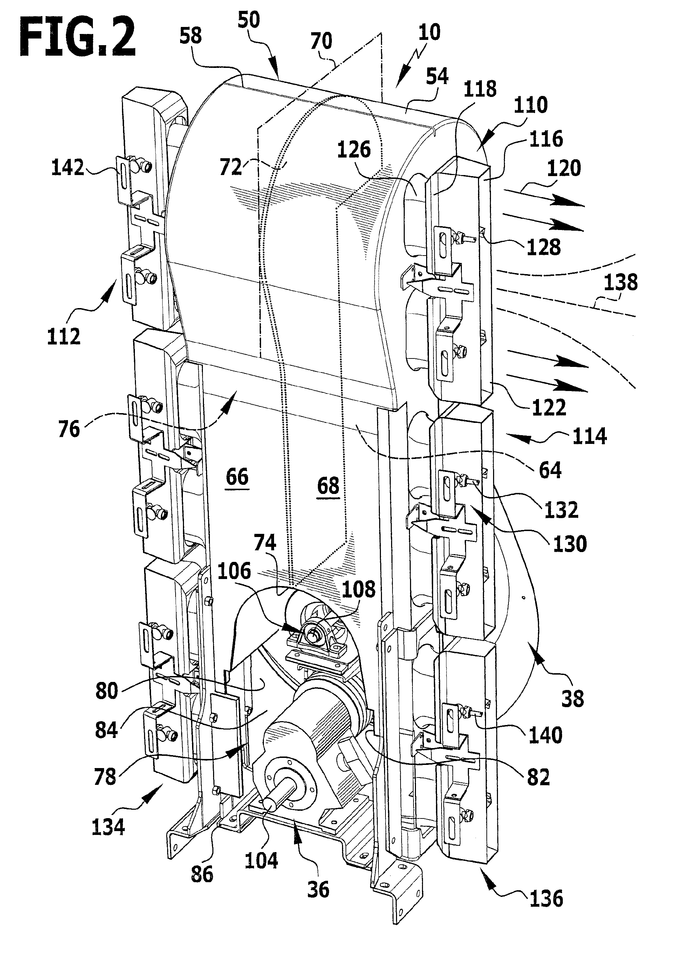

Eine Gelenkwelle 32 ist durch den Längsdurchbruch 26 zwischen der Pumpe 28 und der Verteilergebläsevorrichtung 10 geführt. Beispielsweise ist die Gelenkwelle 32 an ein Riemengetriebe 34 gekoppelt, über welches eine Antriebseinrichtung 36 (Figur 2) der Verteilergebläsevorrichtung 10 antreibbar ist.

Die Pumpe 28 ist beispielsweise mittels einer Zapfwelle eines Zugfahrzeugs antreibbar.

Es ist grundsätzlich möglich, dass die Verteilergebläsevorrichtung 10 als getrennte Vorrichtung an der Gebläsespritze 12 montierbar ist.

Es ist auch möglich, dass die Verteilergebläsevorrichtung 10 integraler Bestandteil der Gebläsespritze 12 ist.

Weiterhin ist es möglich, dass die Verteilergebläsevorrichtung mit einer bekannten üblichen Aufsattelspritze zum Einsatz kommt, wobei insbesondere dann das Gerätegestell 30 an einer üblichen Dreipunktaufhängung eines Zugfahrzeuges (insbesondere landwirtschaftlichen Zugfahrzeuges) montierbar ist und die Aufsattelspritze auch die Pumpe für das Spritzmittel und gegebenenfalls einen Spritzmittel-Tank umfasst.

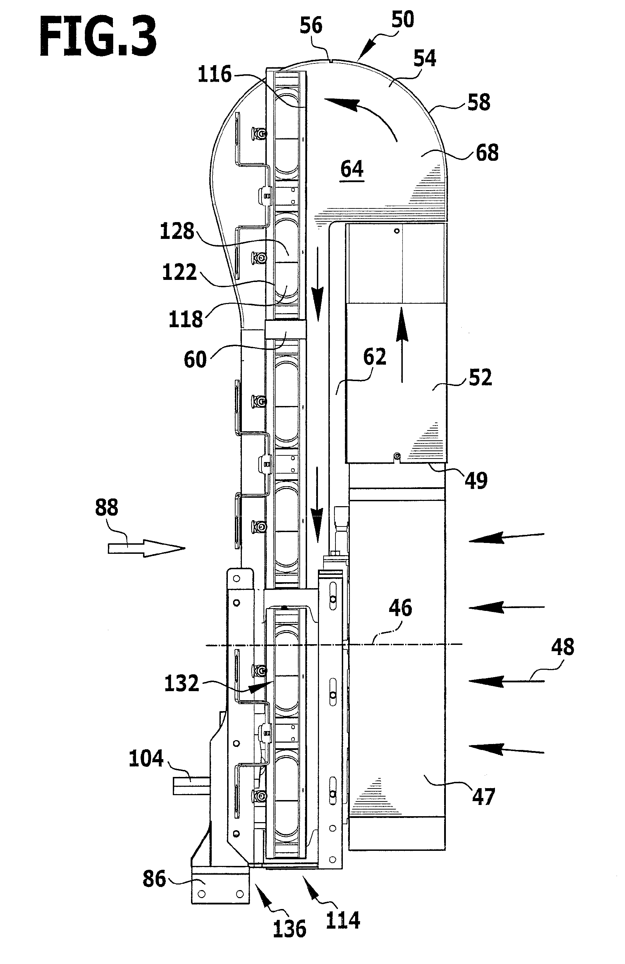

Die Verteilergebläsevorrichtung 10 umfasst ein Gebläse 38 mit einem Laufrad 40. Das Gebläse 38 ist mit dem Laufrad 40 an einem hinteren Ende 42 der Verteilergebläsevorrichtung 10 angeordnet. Das Laufrad 40 sitzt an einer Drehwelle 44 mit einer Drehachse 46, welche im wesentlichen parallel zur Fahrtrichtung 22 ist. Das Gebläse 38 dient zur Ansaugung von Luft (in Figur 3 durch die Pfeile 48 angedeutet), um einen Verteilerluftstrom für das Spritzmittel zu erzeugen.

Das Gebläse 38 umfasst ein Gebläsegehäuse 47 mit einer Gehäuseöffnung 49.

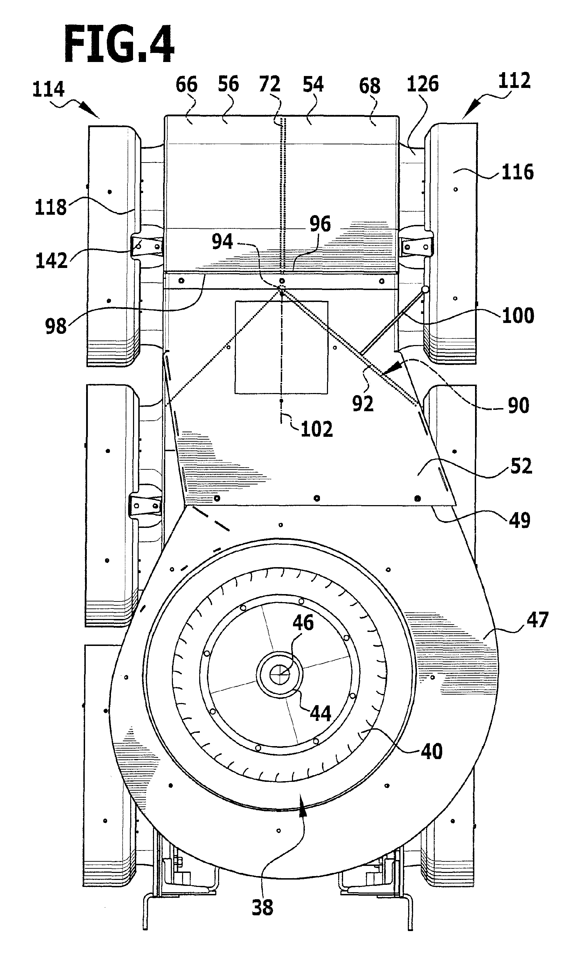

Die Verteilergebläsevorrichtung 10 weist ein Strömungsführungsgehäuse 50 zur Strömungsführung der angesaugten Luft auf. Das Strömungsführungsgehäuse 50 hat einen ersten Bereich 52, welcher mit dem Gebläsegehäuse 47 über dessen Gehäuseöffnung 49 verbunden ist (Figuren 3 und 4), und über welchen angesaugte Luft nach oben in einer Gesamtstromrichtung (entgegen der Schwerkraftrichtung) geführt wird. An den ersten Bereich 52 schließt sich ein Umlenkbereich 54 an, in welchem eine Strömungsumlenkung erfolgt. An dem Umlenkbereich 54 ist ein oberes Ende 56 des Strömungsführungsgehäuses 50 (und auch der Verteilergebläsevorrichtung 10) gebildet.

Der Umlenkbereich 54 hat eine gekrümmte bzw. gebogene Wand, welche sich im Querschnitt (Figur 3) beispielsweise über einen Winkel von mindestens 180° erstreckt.

Der Umlenkbereich 54 steht in fluidwirksamer Verbindung mit einem zweiten Bereich 60 des Strömungsführungsgehäuses 50, in welchem angesaugte Luft von dem Umlenkbereich 54 kommend von oben nach unten (das heißt entgegen der Schwerkraftrichtung) geführt wird. Der erste Bereich 52 und der zweite Bereich 60 liegen bezogen auf die Fahrtrichtung 22 hintereinander und sind durch (mindestens) eine Wand 62 getrennt. Die einzige fluidwirksame Verbindung zwischen dem ersten Bereich 52 und dem zweiten Bereich 60 erfolgt über den Umlenkbereich 54.

Der erste Bereich 52 dient im wesentlichen zur "Sammlung" und Verteilung der angesaugten Luft auf den Umlenkbereich 54 und auf den zweiten Bereich 60. Über den zweiten Bereich 60 lässt sich Luft gleichmäßig seitlich ausblasen, wie unten noch näher beschrieben wird. Insbesondere lässt sich eine in guter Näherung homogene Luftwand ausbilden.

Ein Innenraum 64 des Strömungsführungsgehäuses 50 ist in eine erste Strömungskammer 66 und eine zweite Strömungskammer 68 unterteilt. Die beiden Strömungskammern 66 und 68 liegen quer zur Richtung der Drehachse 46 (das heißt quer zur Fahrtrichtung 22) nebeneinander.

Die erste Strömungskammer 66 und die zweite Strömungskammer 68 sind im wesentlichen gleich ausgebildet. Sie sind insbesondere symmetrisch zu einer Mittelebene 70 der Verteilergebläsevorrichtung 10. Die Drehwelle 44 liegt auf dieser Mittelebene 70.

Die erste Strömungskammer 66 und die zweite Strömungskammer 68 sind durch eine Trennwand 72 getrennt. Diese Trennwand 72 verläuft mindestens teilweise durch den Umlenkbereich 54. Sie kann auch noch mindestens teilweise in dem ersten Bereich 52 liegen. Ferner verläuft sie durch den zweiten Bereich 60 bis zu einer Wand 74 (Figur 2). Dadurch sind die erste Strömungskammer 66 und die zweite Strömungskammer in dem zweiten Bereich 60 und mindestens teilweise in dem Umlenkbereich 54 gebildet.

Der zweite Bereich 60 weist einen Teilbereich 76 auf, in welchem ein Teil der Trennwand 72 liegt. Ferner weist er einen auf den Teilbereich 76 nach unten folgenden Teilbereich 78 auf, in welchem zwischen einer Begrenzungswand 80 der ersten Strömungskammer 66 und einer Begrenzungswand 82 der zweiten Strömungskammer 68 ein Freibereich 84 liegt. Dieser Freibereich 84 wiederum ist zu dem Teilbereich 76 hin durch die Wand 74 begrenzt. Die Begrenzungswände 80, 82 bilden Trennwände zur Trennung der ersten Strömungskammer 66 und der zweiten Strömungskammer 68, wobei es sich um "externe" Trennwände handelt, die das Strömungsführungsgehäuse 50 auch nach außen, nämlich zu dem Freibereich 84 hin, begrenzen.

Die Breite der ersten Strömungskammer 66 bzw. der zweiten Strömungskammer 68 in dem Teilbereich 78 ist kleiner als deren entsprechende Breite in dem Teilbereich 76. Über den Teilbereich 78 verläuft der zweite Bereich 60 bis an oder in der Nähe einer Montageeinrichtung 86, über welche die Verteilergebläsevorrichtung 10 an dem Gerätegestell 30 montierbar ist.

Der zweite Bereich 60 hat in der Draufsicht in einer Richtung entgegen zur Fahrtrichtung 22 (in der Richtung 88 gemäß Figur 3) näherungsweise die Form einer Hose.

In dem ersten Bereich 52 ist eine Einstelleinrichtung 90 (Figur 4) angeordnet, über welche die Teil-Volumenströme, welche der ersten Strömungskammer 66 und der zweiten Strömungskammer 68 zugeführt werden, einstellbar sind.

Bei dem gezeigten Ausführungsbeispiel umfasst die Einstelleinrichtung 90 eine schwenkbare Klappe 92, wobei die Klappe 92 um eine Schwenkachse 94 schwenkbar ist, welche auf der Mittelebene 70 liegt und im wesentlichen parallel zu der Drehachse 46 des Laufrads 40 ist (und damit im wesentlichen parallel zur Fahrtrichtung 22) ist.

Die Klappe 92 ist vor einer ersten Einlassöffnung 96 der ersten Strömungskammer 66 und vor einer zweiten Einlassöffnung 98 der zweiten Strömungskammer 68 angeordnet. Die Einlassöffnungen 96 und 98 sind durch denjenigen Querschnittsbereich des Strömungsführungsgehäuses 50 gebildet, bis zu dem die Trennwand 72 verläuft. Die Einlassöffnungen 96 und 98 sind beispielsweise am Übergang von dem ersten Bereich 52 zu dem Umlenkbereich 54 oder in der Nähe dieses Übergangs angeordnet.

Die Klappe 92 ist beispielsweise über einen Stab 100 extern betätigbar. Der Stab 100 ist dabei bezüglich des Strömungsführungsgehäuses 50 fixierbar, um eine Schwenkstellung fixieren zu können.

Die Klappe 92 weist eine Stellung 102 auf, bei welcher eine parallele Strömungsaufteilung ermöglicht ist. Beispielsweise ist die Stellung 102 eine solche, bei der die Klappe 92 mit ihrer Mittelebene an der Mittelebene 70 liegt. In dieser Stellung ist die Klappe 92 im wesentlichen eine Fortsetzung der Trennwand 72. Angesaugte Luft wird dann gleichmäßig parallel über den ersten Bereich 52 auf die erste Strömungskammer 66 und die zweite Strömungskammer 68 aufgeteilt. (Die Klappe 92 ragt dabei nur insoweit in den ersten Bereich 52, dass eine solche gleichmäßige Aufteilung ermöglicht ist.)

Die Klappe 92 weist ferner einstellbare Schwenkstellungen auf, über die einstellbar ist, welcher Teil-Volumenstrom der angesaugten Luft der ersten Strömungskammer 66 und der zweiten Strömungskammer 68 zugeführt wird, das heißt wie der Gesamtvolumenstrom der angesaugten Luft auf die beiden Strömungskammern 66 und 68 aufgeteilt wird. Insbesondere ist ein teilweise und vollständiger Verschluss der ersten Einlassöffnung 96 oder der zweiten Einlassöffnung 98 möglich. Dadurch kann der entsprechende Volumenstrom, welcher durch die erste Strömungskammer 66 und die zweite Strömungskammer 68 strömt, dosiert werden. Insbesondere ist eine "Abschaltung" der ersten Strömungskammer 66 oder der zweiten Strömungskammer 68 möglich.

Gehäusewände des Strömungsführungsgehäuses 50 sind am ersten Bereich 52 beispielsweise aus Metall oder Kunststoff hergestellt. Es kann vorgesehen sein, dass Gehäusewände des Strömungsführungsgehäuses 50 an dem zweiten Bereich 60 aus einem Kunststoffmaterial oder Metall hergestellt sind.

Die Antriebseinrichtung 36 für das Gebläse 38 ist mindestens teilweise in dem Freibereich 84 angeordnet (Figur 2). Beispielsweise umfasst die Antriebseinrichtung 36 eine Antriebswelle 104, welche über das Riemengetriebe 34 an die Gelenkwelle 32 gekoppelt ist und welche in dem Freibereich 84 positioniert ist. Die Antriebswelle 104 ist wiederum über eine Getriebeeinrichtung 106 an eine Laufradwelle 108 gekoppelt. Die Laufradwelle 108 ist beabstandet zu der Antriebswelle 104, wobei die jeweiligen Drehachsen auf der Mittelebene 70 liegen. Die Getriebeeinrichtung 106 ist in dem Freibereich 84 positioniert.

Es ist vorgesehen, dass das Laufrad mit einer relativ geringen Drehzahl, welche beispielsweise zwischen 1000 U/min und 1500 U/min liegt, angetrieben wird. Dadurch wird die Geräuschemission relativ gering gehalten.

An dem Strömungsführungsgehäuse 50 ist eine Luftausblaseinrichtung 110 angeordnet, über welche angesaugte Luft seitlich ausblasbar ist. Dazu umfasst die Luftausblaseinrichtung 110 eine erste Luftausblasreihe 112 und eine zweite Luftausblasreihe 114. Die erste Luftausblasreihe 112 und die zweite Luftausblasreihe 114 wiederum umfassen eine Mehrzahl von Luftleiteinrichtungen 116. In dem gezeigten Ausführungsbeispiel umfassen die erste Luftausblasreihe 112 und die zweite Luftausblasreihe 114 jeweils drei Luftleiteinrichtungen 116.

Die Luftleiteinrichtungen 116 stehen über entsprechende Öffnungen 118 (Figur 4) in fluidwirksamer Verbindung mit dem Innenraum 64 des Strömungsführungsgehäuses 50. Die Luftleiteinrichtungen 116 der ersten Luftausblasreihe 112 stehen dabei in fluidwirksamer Verbindung mit der ersten Strömungskammer 66 und die Luftleiteinrichtungen 116 der zweiten Luftausblasreihe 114 stehen in fluidwirksamer Verbindung mit der zweiten Strömungskammer 68.

Die Luftleiteinrichtungen 116 der ersten Luftausblasreihe 112 bzw. der zweiten Luftausblasreihe 114 sind jeweils fluchtend zueinander ausgerichtet, um eine Luftwand bilden zu können. Sie sind einander abgewandt gegenüberliegend, so dass sie einander abgewandte Luftausblasrichtungen 120 (Figur 2) aufweisen. Durch die erste Luftausblasreihe 112 lässt sich bezogen auf die Fahrtrichtung 22 Luft nach links ausblasen und durch die zweite Luftausblasreihe 114 lässt sich Luft nach rechts ausblasen.

Die Luftleiteinrichtungen 116 sind kastenförmig ausgebildet mit einem Innenraum und mit einer Mündungsöffnung 122, welche mindestens näherungsweise rechteckförmig ist. Eine Luftleiteinrichtung 116 steht über zwei Öffnungen 118 in fluidwirksamer Verbindung mit dem Innenraum 64 des Strömungsführungsgehäuses 50.

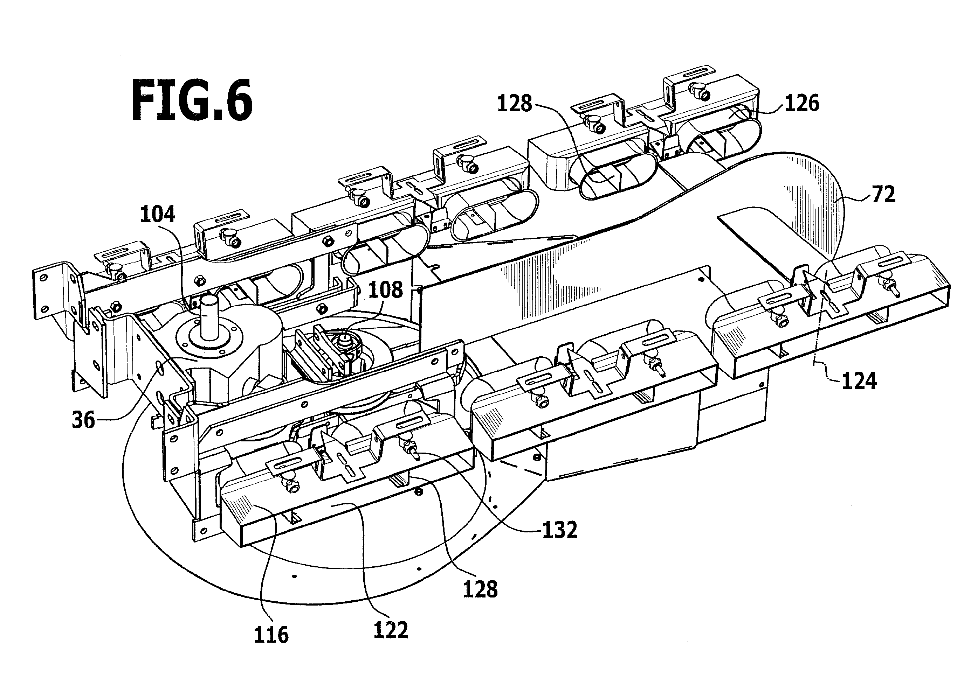

Die Luftleiteinrichtungen 116 sind schwenkbar an dem Strömungsführungsgehäuse 50 angeordnet mit einer Schwenkachse 124 (Figur 6), welche parallel zur Mittelebene 70 ist und im wesentlichen parallel zur Fahrtrichtung 22 ist (und damit auch im wesentlichen parallel zur Drehachse 46 des Laufrads 40). Die Schwenkstellungen der Luftleiteinrichtungen 116 sind insbesondere fixierbar. Beispielsweise sind bezogen auf eine unverschwenkte Stellung, bei welcher die Mündungsöffnung 122 mit ihrer Flächennormalen senkrecht zur Mittelebene 70 orientiert ist, in einem Winkelbereich von beispielsweise ± 10° verschwenkbar. Über die Verschwenkbarkeit der Luftleiteinrichtungen 116 lässt sich die Richtung des ausgeblasenen Luftstroms einstellen.

Die Luftleiteinrichtungen 116 mit ihren Öffnungen 118 stehen über Verbindungselemente 126 mit dem Innenraum 64 des Strömungsführungsgehäuses 50 in Verbindung. Das Strömungsführungsgehäuse 50 weist jeweilige entsprechende Öffnungen auf. Die Verbindungselemente 126 tauchen über die Öffnungen 118 in die jeweiligen Luftleiteinrichtungen 116 ein, zumindest in deren unverschwenkter Stellung. Es ist keine dichtende Verbindung zwischen den Verbindungselementen 126 und den zugehörigen Luftleiteinrichtungen 116 notwendig. Durch einen nicht abgedichteten Anschluss lässt sich ein Venturi-Effekt erzielen, über welchen sich das ausgeblasene Luftvolumen pro Zeiteinheit erhöhen lässt; durch "offene" Bereiche zwischen den Verbindungselementen 126 und den entsprechenden Luftleiteinrichtungen 116 wird aufgrund des Venturi-Effekts zusätzlich Luft angesaugt.

Die Öffnungen 118 weisen vorzugsweise eine kleinere Querschnittsfläche auf als die zugeordneten Mündungsöffnungen 122 der jeweiligen Luftleiteinrichtungen 116.

An den Mündungsöffnungen 122 sind innerhalb der Luftleiteinrichtungen 116 Luftleitflächenelemente 128 angeordnet. Diese sind insbesondere feststellbar verschwenkbar, um eine weitere Verstellbarkeit der Richtung des Luftstroms zu erhalten.

Die Luftleitflächenelemente 118 sind beispielsweise als Luftleitbleche ausgebildet, welche sich über eine Breite der Mündungsöffnungen 122 (parallel zur Fahrtrichtung 22) erstreckend an den Luftleiteinrichtungen 116 angeordnet sind.

Vorzugsweise ist jeder Öffnung 118 ein eigenes Luftleitflächenelement 128 zugeordnet, wobei diese in einer Grundstellung symmetrisch zu den Öffnungen 118 ausgerichtet sind.

Die Verteilergebläsevorrichtung 10 umfasst eine Düseneinrichtung 130 mit einer Mehrzahl von Düsen 132. Die Düsen 132 sind über entsprechende Leitungen mit dem Tank 24 verbunden. Spritzmittel wird von dem Tank 24 mittels der Pumpe 28 den Düsen 132 zugeführt.

Die Düseneinrichtung 130 weist eine erste Düsenreihe 134 auf, welcher die erste Luftausblasreihe 112 zugeordnet ist. Ferner umfasst sie eine zweite Düsenreihe 136, welcher die zweite Luftausblasreihe 114 zugeordnet ist. Die Düsen 132 sind dabei jeweils links und rechts bezüglich Seitenwänden des Strömungsführungsgehäuses 50 positioniert, so dass Spritzrichtungen 138 (Figur 2) mindestens näherungsweise bezogen auf die Fahrtrichtung rechts (erste Düsenreihe 134) und links (zweite Düsenreihe 136) vorliegen.

Die Düsen 132 sind an oder in der Nähe der Luftleiteinrichtungen 116 angeordnet. Vorzugsweise sind sie mit einem vorderen Ende 140 bezüglich den jeweiligen Mündungsöffnungen 122 zurückgesetzt, das heißt ragen nicht über diese hinaus, um sie gegen mechanische Beschädigungen zu schützen.

Bei dem gezeigten Ausführungsbeispiel sind jeder Luftleiteinrichtung 116 zwei Düsen 132 zugeordnet. An jeder Seite des Strömungsführungsgehäuses 50 sind sechs Düsen 132 und drei Luftleiteinrichtungen 116 angeordnet. Jeder Öffnung 118 wiederum ist eine Düse 132 zugeordnet. Jeder Düse 132 ist dadurch auch ein Luftleitflächenelement 128 zugeordnet.

Die Düsen 132 sind schwenkbar mit einer Schwenkachse parallel zur Fahrtrichtung 22. Insbesondere sind die Düsen 132 gemeinsam mit den zugeordneten Luftleiteinrichtungen 116 schwenkbar, das heißt durch eine Verschwenkung der entsprechenden Luftleiteinrichtung 116 werden die beiden zugeordneten Düsen 132 synchron verschwenkt. Dazu sitzen Düsen 132 an einer Gestelleinrichtung 142, an welcher auch die zugeordnete Luftleiteinrichtung 116 sitzt. Diese Gestelleinrichtung 142 ist wiederum an einer Außenseite des Strömungsführungsgehäuses 50 schwenkbar fixiert, wobei die entsprechende Schwenkstellung feststellbar ist.

Bei dem gezeigten Ausführungsbeispiel erstreckt sich die Luftausblaseinrichtung 110 im wesentlichen über die gesamte Höhe des Strömungsführungsgehäuses 50. Es sind dabei Luftleiteinrichtungen der ersten Luftausblasreihe 112 und der zweiten Luftausblasreihe 114 in den Teilbereichen 76 und 78 des zweiten Bereichs 60 des Strömungsführungsgehäuses 50 angeordnet sowie auch mindestens teilweise an dem Umlenkbereich 54.

Durch die Luftausblaseinrichtung 110 lässt sich eine Luftwand ausbilden, welche über die Höhe des Strömungsführungsgehäuses 50 ausbildbar ist und über diese Höhe auch sehr homogen ist. Sie lässt sich auch in einem Gebiet unterhalb des Gebläses 38 ausbilden. Bei der Stellung 102 der Klappe 92 ist die Luftwand, welche nach links und nach rechts (bezogen auf die Fahrtrichtung 22) ausgeblasen wird, im wesentlichen symmetrisch zu der Mittelebene 70.

Je nach Schwenkstellung der Klappe 92 lässt sich die Ausblasung nach links oder nach rechts abschalten bzw. verringern.

Durch die Luftwand lässt sich eine bessere und gleichmäßigere Verteilung des über die Düsen 132 ausgesprühten Spritzmittels erreichen. Dies ist beispielsweise sehr vorteilhaft, wenn Weinreben besprüht werden sollen.

Durch die Abschaltbarkeit der Strömungsdurchführung in der ersten Strömungskammer 66 und der zweiten Strömungskammer 68 lässt sich auf vorteilhafte Weise eine Randzeilenbehandlung durchführen. Beispielsweise wird einer Randzeile Spritzmittel ohne Luftausblasung zugeführt, um eine geringere Reichweite für das Spritzmittel zu erhalten. Dies kann wünschenswert oder notwendig sein, wenn in der Nähe Gewässer sind.

Durch die Schwenkbarkeit der Luftleiteinrichtungen 116 und der Luftleitflächenelemente 126 der Luftleiteinrichtungen 116 lässt sich je nach Anwendung eine optimierte Luftbeaufschlagung erreichen.

Erfindungsgemäß wird eine kompakt ausgebildete Verteilergebläsevorrichtung bereitgestellt, welche bei hoher Leistungsfähigkeit geringe Breitenabmessungen aufweist. Es liegen erweiterte Steuerungsmöglichkeiten vor.

Ferner lässt sich das Gebläse 38 mit relativ geringer Drehzahl des Laufrads 40 betreiben bei entsprechend verringerter Geräuschemission.

## Patentansprüche

1. Verteilergebläsevorrichtung, umfassend mindestens ein Gebläse (38) zur Luftansaugung, eine Düseneinrichtung (130) mit Düsen (132) für zu verteilendes Medium, eine Luftausblaseinrichtung (110), welche der Düseneinrichtung (130) zugeordnet ist und über welche angesaugte Luft ausblasbar ist, und ein Strömungsführungsgehäuse (50) für angesaugte Luft,
**dadurch gekennzeichnet , dass** das Strömungsführungsgehäuse (50) einen ersten Bereich (52) aufweist, in welchem Luft von dem mindestens einen Gebläse (38) weg nach oben führbar ist, einen zweiten Bereich (60) aufweist, in dem angesaugte Luft nach unten führbar ist, wobei die Luftausblaseinrichtung (110) in fluidwirksamer Verbindung mit dem zweiten Bereich (60) steht, und einen Umlenkbereich (54) aufweist, über welchen der erste Bereich (52) und der zweite Bereich (60) fluidwirksam verbunden sind und an welchem eine Strömungsumlenkung erfolgt.

2. Verteilergebläsevorrichtung nach Anspruch 1, **dadurch gekennzeichnet, dass** der erste Bereich (52) und der zweite Bereich (60) hintereinander angeordnet sind mit mindestens einer Wand (62) zwischen dem ersten Bereich (52) und dem zweiten Bereich (60).

3. Verteilergebläsevorrichtung nach Anspruch 1 oder 2, **dadurch gekennzeichnet, dass** der Umlenkbereich (54) ein oberes Ende (56) des Strömungsführungsgehäuses (50) bildet.

4. Verteilergebläsevorrichtung nach einem der vorangehenden Ansprüche, **dadurch gekennzeichnet, dass** der Umlenkbereich (54) eine gekrümmte Wand (58) aufweist.

5. Verteilergebläsevorrichtung nach einem der vorangehenden Ansprüche, **dadurch gekennzeichnet, dass** die Düseneinrichtung (130) so ausgebildet ist, dass Medium nach links und/oder nach rechts bezogen auf eine Fahrtrichtung (22) sprühbar ist.

6. Verteilergebläsevorrichtung nach einem der vorangehenden Ansprüche, **dadurch gekennzeichnet, dass** die Düseneinrichtung (130) eine erste Düsenreihe (134) mit einer Mehrzahl von Düsen (132) und eine zweite Düsenreihe (136) mit einer Mehrzahl von Düsen (132) aufweist.

7. Verteilergebläsevorrichtung nach Anspruch 6, **dadurch gekennzeichnet, dass** die erste Düsenreihe (134) seitlich angeordnet ist.

8. Verteilergebläsevorrichtung nach Anspruch 6 oder 7, **dadurch gekennzeichnet, dass** die zweite Düsenreihe (136) seitlich angeordnet ist.

9. Verteilergebläsevorrichtung nach einem der Ansprüche 6 bis 8, **dadurch gekennzeichnet, dass** die Sprührichtung der Düsen (132) der ersten Düsenreihe (134) und der Düsen (132) der zweiten Düsenreihe (136) mindestens näherungsweise entgegengerichtet ist.

10. Verteilergebläsevorrichtung nach einem der Ansprüche 6 bis 9, **dadurch gekennzeichnet, dass** die Luftausblaseinrichtung (110) eine der ersten Düsenreihe (134) zugeordnete erste Luftausblasreihe (112) und der zweiten Düsenreihe (136) zugeordnete zweite Luftausblasreihe (114) aufweist.

11. Verteilergebläsevorrichtung nach Anspruch 10, **dadurch gekennzeichnet, dass** die erste Luftausblasreihe (112) mindestens teilweise an einer Seitenwand des zweiten Bereichs (60) angeordnet ist.

12. Verteilergebläsevorrichtung nach Anspruch 10 oder 11, **dadurch gekennzeichnet, dass** die zweite Luftausblasreihe (114) mindestens teilweise an einer Seitenwand des zweiten Bereichs (60) angeordnet ist.

13. Verteilergebläsevorrichtung nach einem der vorangehenden Ansprüche, **dadurch gekennzeichnet, dass** das Strömungsführungsgehäuse (50) eine erste Strömungskammer (66) und eine getrennte zweite Strömungskammer (68) aufweist.

14. Verteilergebläsevorrichtung nach Anspruch 13, **dadurch gekennzeichnet, dass** die erste Strömungskammer (66) und die zweite Strömungskammer (68) parallel zueinander angeordnet sind.

15. Verteilergebläsevorrichtung nach Anspruch 13 oder 14, **dadurch gekennzeichnet, dass** zwischen der ersten Strömungskammer (66) und der zweiten Strömungskammer (68) mindestens eine Wand (70; 80, 82) liegt.

16. Verteilergebläsevorrichtung nach einem der Ansprüche 13 bis 15, **dadurch gekennzeichnet, dass** die erste Strömungskammer (66) und die zweite Strömungskammer (68) symmetrisch angeordnet und ausgebildet sind.

17. Verteilergebläsevorrichtung nach einem der Ansprüche 13 bis 16, **dadurch gekennzeichnet, dass** die erste Strömungskammer (66) und die zweite Strömungskammer (68) an dem zweiten Bereich (60) angeordnet sind.

18. Verteilergebläsevorrichtung nach Anspruch 16 oder 17, **dadurch gekennzeichnet, dass** eine erste Luftausblasreihe (112) an die erste Strömungskammer (66) gekoppelt ist.

19. Verteilergebläsevorrichtung nach einem der Ansprüche 16 bis 18, **dadurch gekennzeichnet, dass** eine zweite Luftausblasreihe (114) an die zweite Strömungskammer (68) gekoppelt ist.

20. Verteilergebläsevorrichtung nach einem der Ansprüche 16 bis 19, **dadurch gekennzeichnet, dass** angesaugte Luft parallel auf die erste Strömungskammer (66) und die zweite Strömungskammer (68) aufteilbar ist oder in unterschiedlichen Volumenströmen auf die erste Strömungskammer (66) und die zweite Strömungskammer (68) aufteilbar ist.

21. Verteilergebläsevorrichtung nach Anspruch 20, **dadurch gekennzeichnet, dass** eine Einstelleinrichtung (90) zur Einstellung der Volumenströme in der ersten Strömungskammer (66) und der zweiten Strömungskammer (68) vorgesehen ist.

22. Verteilergebläsevorrichtung nach Anspruch 21, **dadurch gekennzeichnet, dass** die Einstelleinrichtung (90) mindestens eine schwenkbar angeordnete Klappe (92) aufweist.

23. Verteilergebläsevorrichtung nach Anspruch 22, **dadurch gekennzeichnet, dass** die mindestens eine Klappe (92) mindestens teilweise an dem ersten Bereich (52) angeordnet ist.

24. Verteilergebläsevorrichtung nach Anspruch 22 oder 23, **dadurch gekennzeichnet, dass** die mindestens eine Klappe (92) eine Stellung (102) aufweist, in welcher die angesaugte Luft gleichmäßig auf die erste Strömungskammer (66) und die zweite Strömungskammer (68) aufteilbar ist.

25. Verteilergebläsevorrichtung nach Anspruch 24, **dadurch gekennzeichnet, dass** die mindestens eine Klappe (92) Schwenkstellungen aufweist, über welche die Aufteilung des angesaugten Luftvolumenstroms auf die erste Strömungskammer (66) und die zweite Strömungskammer (68) einstellbar ist.

26. Verteilergebläsevorrichtung nach einem der Ansprüche 13 bis 25, **dadurch gekennzeichnet, dass** der zweite Bereich (60) einen Bereich (76) aufweist, in welchem die erste Strömungskammer (66) und die zweite Strömungskammer (68) durch eine Trennwand (72) getrennt sind.

27. Verteilergebläsevorrichtung nach einem der Ansprüche 13 bis 26, **dadurch gekennzeichnet, dass** der zweite Bereich (60) einen Bereich (78) aufweist, an welchem zwischen der ersten Strömungskammer (66) und der zweiten Strömungskammer (68) ein Freibereich (84) liegt.

28. Verteilergebläsevorrichtung nach Anspruch 27, **dadurch gekennzeichnet, dass** eine Antriebseinrichtung (36) für das mindestens eine Gebläse (38) mindestens teilweise in dem Freibereich (84) angeordnet ist.

29. Verteilergebläsevorrichtung nach Anspruch 28, **dadurch gekennzeichnet, dass** mindestens ein Teil einer Getriebeeinrichtung (106) in dem Freiraum (84) angeordnet ist.

30. Verteilergebläsevorrichtung nach einem der vorangehenden Ansprüche, **dadurch gekennzeichnet, dass** das mindestens eine Gebläse (38) ein Laufrad (40) aufweist, welches mit einer Drehzahl zwischen 1000 U/min und 1500 U/min angetrieben ist.

31. Verteilergebläsevorrichtung nach einem der vorangehenden Ansprüche, **dadurch gekennzeichnet, dass** die Luftausblaseinrichtung (110) eine Gesamthöhe aufweist, welche im wesentlichen der Gesamthöhe des Strömungsführungsgehäuses (50) entspricht.

32. Verteilergebläsevorrichtung nach einem der vorangehenden Ansprüche, **dadurch gekennzeichnet, dass** Düsen (132) der Düseneinrichtung (130) schwenkbar sind.

33. Verteilergebläsevorrichtung nach einem der vorangehenden Ansprüche, **dadurch gekennzeichnet, dass** die Luftausblaseinrichtung (110) Luftleiteinrichtungen (116) aufweist, welche einer oder mehreren Düsen (132) zugeordnet sind, wobei über die Luftleiteinrichtungen (116) Ausblasluft der oder den Düsen (132) bereitstellbar ist.

34. Verteilergebläsevorrichtung nach Anspruch 33, **dadurch gekennzeichnet, dass** eine Luftleiteinrichtung (116) schwenkbar angeordnet ist.

35. Verteilergebläsevorrichtung nach Anspruch 33 oder 34, **dadurch gekennzeichnet, dass** eine Luftleiteinrichtung (116) um eine Schwenkachse im wesentlichen parallel zu einer Fahrtrichtung (22) der Verteilergebläsevorrichtung schwenkbar ist.

36. Verteilergebläsevorrichtung nach Anspruch 34 oder 35, **dadurch gekennzeichnet, dass** die Düse (132) oder Düsen (132) derart mit einer zugeordneten Luftleiteinrichtung (116) gekoppelt sind, dass die Düse (132) oder Düsen (132) und die Luftleiteinrichtung (116) gemeinsam schwenkbar sind.

37. Verteilergebläsevorrichtung nach einem der Ansprüche 33 bis 36, **dadurch gekennzeichnet, dass** eine Luftleiteinrichtung (116) eine mindestens näherungsweise rechteckförmige Mündungsöffnung (122) aufweist.

38. Verteilergebläsevorrichtung nach einem der Ansprüche 33 bis 37, **dadurch gekennzeichnet, dass** ein vorderes Ende (140) einer Düse (132) bezüglich einer Mündungsöffnung (122) einer Luftleiteinrichtung (116) zurückgesetzt ist.

39. Verteilergebläsevorrichtung nach einem der Ansprüche 33 bis 38, **dadurch gekennzeichnet, dass** eine Luftleiteinrichtung (116) ein oder mehrere Luftleitflächenelemente (128) aufweist.

40. Verteilergebläsevorrichtung nach Anspruch 39, **dadurch gekennzeichnet, dass** das oder die Luftleitflächenelemente (128) schwenkbar an der zugeordneten Luftleiteinrichtung (116) angeordnet sind.

41. Verteilergebläsevorrichtung nach Anspruch 39 oder 40, **dadurch gekennzeichnet, dass** jeder Düse (132) ein Luftleitflächenelement (128) zugeordnet ist.

42. Verteilergebläsevorrichtung nach einem der Ansprüche 39 bis 41, **dadurch gekennzeichnet, dass** ein Luftleitflächenelement (128) sich im wesentlichen über eine Breite einer Mündungsöffnung (122) der Luftleiteinrichtung (116) erstreckt.

43. Verteilergebläsevorrichtung nach einem der Ansprüche 33 bis 42, **dadurch gekennzeichnet, dass** eine Luftleiteinrichtung (116) mindestens eine Öffnung (118) aufweist, mittels welcher sie in fluidwirksamer Verbindung mit einem Innenraum (64) des Strömungsführungsgehäuses (50) steht.

44. Verteilergebläsevorrichtung nach Anspruch 43, **dadurch gekennzeichnet, dass** die Anzahl der Öffnungen (118) der Anzahl der Düsen (132) entspricht, welchen die Luftleiteinrichtung (116) zugeordnet ist.

45. Verteilergebläsevorrichtung nach Anspruch 43 oder 44, **dadurch gekennzeichnet, dass** eine Querschnittsfläche der mindestens einen Öffnung (118) kleiner ist als eine zugeordnete Mündungsöffnung (122) der Luftleiteinrichtung (116).

46. Verteilergebläsevorrichtung nach einem der vorangehenden Ansprüche, **gekennzeichnet durch** eine fahrbare Ausbildung.

47. Verteilergebläsevorrichtung nach einem der vorangehenden Ansprüche, **dadurch gekennzeichnet, dass** die Luftausblaseinrichtung (110) sich bis in den Umlenkbereich (54) erstreckt.
